# EUROPEAN PATENT APPLICATION

(11) **EP 2 159 628 A1**
(43) Date of publication of application: **03.03.2010**
(21) Application number: 09000281.7
(22) Date of filing: 12.01.2009
(51) Int. Cl.: G02F 1/13, G06F 1/16

(54) **Flat screen assembly**

(30) Priority: 26.08.2008 CN 200820146871 U
(71) Applicant: Shenzhen TCL New Technology Ltd., Nanshan District Shenzhen Guangdong 518067 (CN)
(72) Inventor: Huerre, Dominique, 92360 Meudon la Forêt (FR); Bertho, Dominique, 49320 Vauchretien (FR); De Oliveira, Joachim, 49380 Notre Dame d'Allencon (FR)
(74) Representative: Frese-Göddeke, Beate

(57) **Abstract**

A known flat screen assembly comprises a flat screen panel (1), e.g. a LCD panel (1), a housing with at least a rear cover (2) and a front cover (3) and with a connection means. The connection means comprises a connecting element (C), which, in an assembled position, is fixed to the rear cover (1). The connecting element (C) comprises at least one snapping part and at least one spacer part. In the assembled position, the snapping part engages a corresponding snapping means of the front cover (2) and the spacer part has contact with the flat screen panel (P).

## Description

### BACKGROUND OF THE INVENTION

### FIELD OF THE INVENTION

The present invention is related to a flat screen assembly, which comprises a flat screen panel and a housing with at least a rear cover and a front cover. Flat screen assemblies are used for computers and TV apparatuses.

### DESCRIPTION OF THE PRIOR ART

A flat screen assembly, mentioned as a display apparatus, is described in the US 2002/0080297 A1. The display apparatus comprises a flat screen panel, namely an LCD panel and a panel support, and a housing with a front cover and a rear cover. It also comprises connection means, namely with at least one coupling and at least one rib. The coupling extends from one of either a rear surface of the front cover or a front face of the rear cover toward the other thereof, having a groove formed on its plane. The rib is formed by the other thereof and is engaged with the groove of the coupling.

The couplings and the ribs extending alongside the sides of the LCD panel still need a certain amount of space. The couplings and the ribs are all parts of the housing and connect the front cover and the rear cover with a limited snapping force.

In the US 2003/0227581 A1 a similar flat screen assembly, mentioned as a display apparatus, is described. Its connection means comprise added reinforcement elements, which need an additional amount of space between the LCD panel and the front cover.

A thin display apparatus known from the US 2004/0012729 A1 comprises a separate LCD frame provided around a LCD panel, a plurality of first combining parts formed on peripheral sides of the LCD frame and a plurality of second combining parts formed on the plane of the LCD frame. A front cover is placed in front of the LCD panel, covering the sides of the LCD panel and is combined to one of the first and second combining parts. A rear cover is placed behind the LCD panel and is combined to the other one of the combining parts. The front and rear cover are made of a conductive metal.

The separate LCD frame needs a significant amount of space between the LCD panel and the front cover. In addition, screws are visible on the front cover, which is formed with a plurality of through holes for the screws in order to couple the front cover to the LCD frame.

US 2003/0189681 A1 describes a structure for mounting a flat display module with a LCD display module, a rear cover and a front cover. The structure includes a supporting member for fixing the LCD display module within the rear cover. The supporting member comprises a supporting part which is plane-contacted with the rear side of the LCD display module, a horizontal guide portion which is vertically bent from the lateral side of the supporting part and a vertical guide portion which is vertically bent from the upper side of the supporting part. A joining part and a position guiding tab are bent upward from the end of the vertical guide portion.

These two parts need a gap between the LCD module and the rear cover. Due to the gap, a frame of the front cover is enlarged. The front cover is separately secured by a side mounting structure or a hook to the LCD display module.

### SUMMARY OF THE INVENTION

It is therefore desirable to improve a flat screen assembly in order to simplify the mounting of the assembly. In addition, it is desirable to improve a flat screen assembly with respect to a good contact between the parts of the housing itself and with respect to a small gap between the flat screen panel and the housing.

According to the invention this can be achieved by the features of claim 1. Possible advantageous developments of the invention are specified in the dependent claims.

A flat screen assembly of the invention comprises a flat screen panel, e.g. a LCD panel, and a housing with a rear cover, a front cover and with a connection means. The connection means comprises at least one connecting element which, in an assembled position, is fixed to the rear cover. According to the invention, the connecting element is provided with at least one snapping part, which, in the assembled position, engages a corresponding snapping means of the front cover. The connecting element is also provided with at least one spacer part which, in the assembled position, has contact with the flat screen panel.

As an advantage of the invention, at least one separate connecting element is used in order to connect the housing, namely the rear cover and the front cover. As a result, the mounting of the assembly is improved. The one-piece connecting element with a spacer part allows to minimise the gap between the flat screen panel and the housing is diminished. A small gap enables a desirable small frame portion of the front cover.

Due to the snapping part which, in the assembled position, engages the corresponding snapping means of the front cover, it is possible to apply a certain pressure between the front cover and the rear cover. This ensures a good contact between the housing parts.

Due to the spacer part which, in the assembled position, has contact with the flat screen panel, the connection between the front and the rear cover is secured.

In an embodiment of the invention, the connecting element is generated as a plate, of which at least a side portion extends parallel to a side of the flat screen panel between the side and a skirt portion of the front cover. The side portion of the plate is provided with one opening for each snapping part, while the snapping part delimitates the opening. The use of the plate enables a very thin gap between the flat screen panel and the front cover.

Advantageously, the snapping part, in the assembled position, applies pressure to the snapping means of the front cover in a direction vertical to a screen area.

Preferably, the snapping part comprises a snapping bar, which delimitates the corresponding opening and which, in the assembled position, extends parallel to the screen area.

Preferably, the snapping bar is provided with ribs.

In an embodiment of the invention, the snapping means comprises at least one hook for each opening which, in the assembled position, protrudes into the opening of the plate.

Preferably, the spacer part is generated as a flexible lug which is arranged in the region of the snapping part.

In an preferred embodiment of the invention, the plate comprises the side portion with the spacer part at which, in the assembled position, the plate is in contact with the flat screen panel, namely with the side of the flat screen panel, and a rear portion, which extends from the side portion over the rear of the flat screen panel and at which, in the assembled position, the plate is fixed to the rear cover.

Preferably the connection means comprises at least two plates arranged at opposite sides of the flat screen panel.

Preferably, the plates are generated by a plastic material.

### BRIEF DESCRIPTION OF THE DRAWINGS

The invention will be explained in more detail using one embodiment, which is illustrated in figures 1 to 5.

It shows:
- Figure 1,: a simplified perspective front view of one connecting element of a flat screen assembly according to the invention;
- Figure 2,: a simplified perspective rear view of the connecting element;
- Figure 3,: a simplified perspective view of a flat screen panel of the flat screen assembly arranged on a front cover with the connecting element;
- Figure 4,: a simplified cross section of the assembly of the flat screen panel, the front cover and the rear cover, where the connecting element is in the assembled position; and
- Figure 5,: a simplified cross section of the assembly corresponding to figure 4, showing a connection between the front cover and the rear cover.

### DETAILED DESCRIPTION OF THE INVENTION

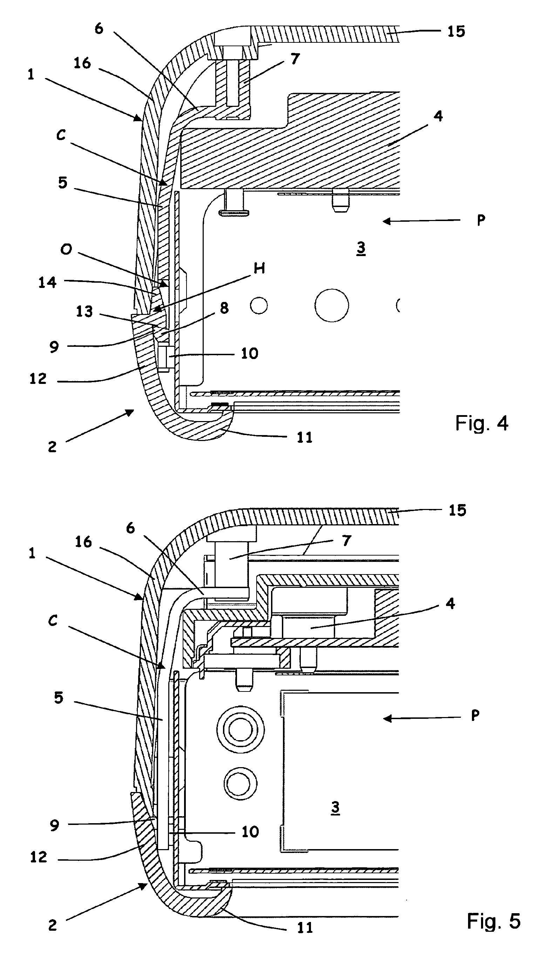

As shown in the figures 4 and 5 a flat screen assembly of an embodiment of the invention comprises a flat screen panel P, which is generated e.g. by a LCD panel, and a housing with at least a rear cover 1 and a front cover 2. The housing also comprises a connection means with at least one connecting element C. In particular, in a first embodiment of the invention, the housing comprises eight connecting elements C of which two are arranged on each of the four sides of the housing. Each connecting element C is provided with one snapping part which, in the assembled position, engages a corresponding snapping means of the front cover 2. The connecting element C is also provided with at least one spacer part which in the assembled portion, has contact with the flat screen panel P.

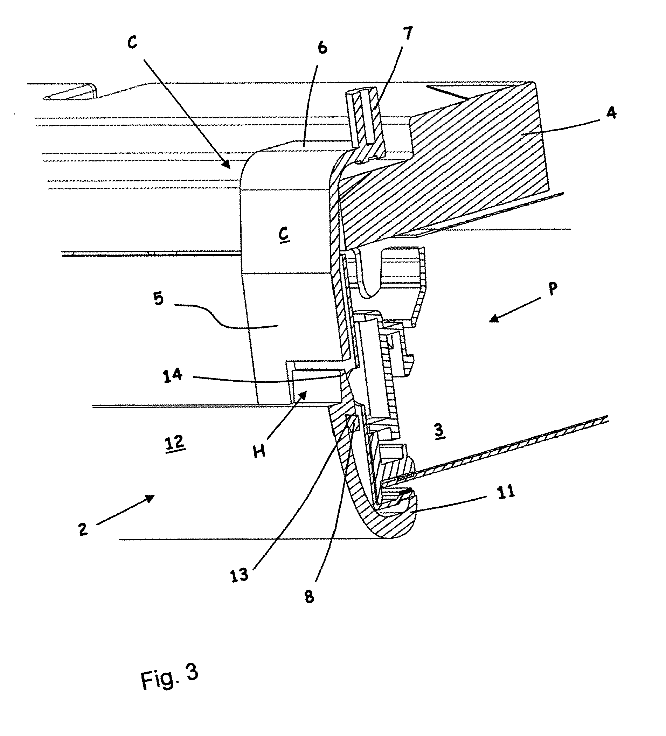

As shown in figures 3 to 5, the flat screen panel P has a panel body 3 which basically has the shape of a cuboid. The flat screen panel P comprises further components 4, e.g. at the rear of the panel body 3. Two of the eight connecting elements C are arranged at each of the four sides of the flat screen panel P, namely of its panel body 3. One of the connecting elements C is shown in the figures.

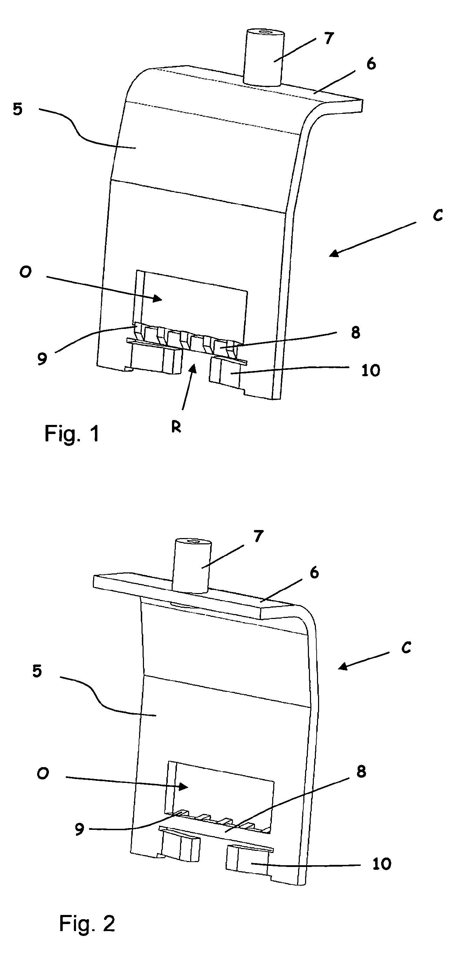

Figures 1 and 2 show a separated connecting element C. Each connecting element C is made by a plate, with a side portion 5 and a rear portion 6. The rear portion 6 is bent away from the side portion 5 at an angle, e.g. of 90°. The rear portion 6 is provided with a boss 7 on its outer side.

The side portion 5 is provided with one snapping part and two spacer parts. In particular, the side portion 5 is provided with one opening O for each snapping part, while the snapping part delimitates the opening O. The opening O has the shape of a square. The snapping part comprises a snapping bar 8 at the lower end of the opening O, i.e. the snapping bar 8 limits the opening O.

The snapping bar 8 is provided with ribs 9 on its outer side. The ribs 9 are generated as noses which are arranged on the snapping bar 8 with a certain distance between them.

The plate is provided with a recess R beneath the snapping bar 8. The recess R has the shape of a square. This square has the same breadth parallel to the screen area as the opening O and the snapping bar 8. It is lower than the height of the opening O and higher than the height of the snapping bar 8.

The plate is provided with two elastic lugs 10. The spacer parts of the connecting element C are generated as these elastic lugs 10. The lugs 10 extend outwards from opposite sides of the recess R parallel to the snapping bar 8.

Figures 3 to 5 show the connecting element C being arranged besides the flat screen panel P. In the assembled position, the side portion 5 extends in front of the corresponding side of the flat screen panel P and the rear portion 6 extends over the rear of the flat screen panel P, where the rear portion 6 protrudes by a certain amount over the rear of the flat screen panel P. In its protruding region the rear portion 6 of the plate is provided with the boss 7 for fixing the plate, i.e. the connecting element C, to the rear cover 1.

In the assembled position when the plate is fixed to the rear cover 1, the side portion 5 of the plate extends vertical to a screen area of the flat screen panel P, while the opening O is arranged in the region of an upper end of the front cover 2. The snapping bar 8 extends parallel to the screen area. The ribs 9 extend in the direction of the front cover 2. The lugs 10 extend parallel to the screen area in the direction of the flat screen panel P and have contact with the flat screen panel P in the assembled position.

Figures 3 to 5 show the flat screen panel P arranged on the front cover 2. The front cover 2 has a frame portion 11 and a skirt portion 12. The skirt portion 12 of the front cover 2 is generated by four side walls, which extend over the sides, namely over a third of the sides, of the flat screen panel P. Figure 3 shows that in the assembled position, the skirt portion 12 of the front cover 2 ends in the region of the opening O of the connecting element C, which is arranged alongside the flat screen panel P and partially between the flat screen panel P and the front cover 1.

The front cover 2 is provided with a snapping means for each snapping part, namely for each snapping bar 8. The snapping means is generated as a hook H, which extends from the front cover 2 to the flat screen panel P, i.e. to the plate and which, in the assembled position, protrudes into the opening O of the plate. The hook H is generated as a small short plate in which the front cover passes and which extends parallel to the side of the flat screen panel P. The hook H has a bottom face 13, which extends parallel to the screen area, and a tapered top 14 at the opposite side of the bottom face 13.

In the assembled position, the snapping part of the connecting element C engages the corresponding hook H of the snapping means of the front cover 2. In particular, the snapping bar 8 is arranged beneath the bottom face 13 of the hook H, while the hook H protrudes into the opening O.

The snapping bar 8 applies pressure onto the hook H vertical to the screen area, when the connecting element C is fixed to the rear cover 1.

As shown in figures 4 and 5, the rear cover 1 has a bottom portion 15 and a wall portion 16, which corresponds to the skirt portion 12 of the front cover 2 and which is generated by four side walls. The side walls of the rear cover 1 extend over the sides, namely over two thirds of the sides, of the flat screen panel P and fit with the corresponding side walls of the front cover 2. Beside the hook H the border of the skirt portion 12 and the border of the wall portion 16 are bevelled in correspondence to each other. This is shown in figure 5.

As indicated in figures 3 to 5, the connecting element C is connected to the rear cover 1 with a screw, which protrudes through the boss 7 of the plate.

In order to assemble the flat screen panel P with the front cover 2 and the rear cover 1, the flat screen panel P is arranged and fixed onto the front cover 2. The eight connecting elements C are arranged between the skirt portion 12 of the front cover 1 at the hooks H. The snapping bars 8 of the plates are moved beneath the bottom faces 13 of the hooks H and the hooks H are moved in the openings O.

The plates are secured in these positions due to the lugs 10, which are in contact with the flat screen panel P and apply a certain pressure parallel to the screen area. The lugs 10 insure that the snapping bars 8 of the plates are well aligned under the hooks H of the front cover 1. The lugs 10 avoid instability and movement of the plates. As a result, the plates are squeezed between the front cover 2 and the flat screen panel P.

The rear cover 1 is fixed to the plate by screws, which are turned into in the bosses 7.

In the assembled position, the connecting elements C, which are fixed to the rear cover 1, generate forces to the front cover vertical to the screen area and enable an overall good connection between the rear cover 1 and the front cover 2.

The connecting elements C, i.e. the plates, are manufactured out of a stable plastic material. In one embodiment the plastic material is a PC with glass fibres or with Noryl. The thickness of the plates ranges from 1,0 to 1,5 mm.

The rear cover 1 and the front cover 2 are generated by a Polystyrene High Impact.

The screen size of this embodiment ranges e.g. from 11" to 26" or less.

In an embodiment with a very small screen size, only two connecting elements C, i.e. plates, are arranged at opposite sides of the flat screen panel P.

In an embodiment, a flat screen assembly with a flat screen panel P with a screen size of e.g. 17" to 32" is used. The assembly is provided with twelve connecting elements C, three on each side. As an alternative, an assembly with a large screen is provided with four, five or more connecting elements C on each side, e.g. four connecting elements C for an assembly with a screen size of more than 32" and five connecting elements C for an assembly with a screen size of 50".

As an alternative, the flat screen assembly has a flat screen panel corresponding to the plasma technology.

## Claims

1. A flat screen assembly comprising a flat screen panel (P), a housing with at least a rear cover (1), a front cover (2) and a connection means, the connection means comprises at least one connecting element (C) which, in an assembled position, is fixed to the rear cover (1), where the connecting element (C) comprises at least one snapping part, which, in the assembled position, engages a corresponding snapping means of the front cover (2) and at least one spacer part, which, in the assembled position, is in contact with the flat screen panel (P).

2. A flat screen assembly according to claim 1, **characterized in that** the connecting element is generated as a plate, of which at least a side portion (5) extends parallel to a side of the flat screen panel (P) between the side and a skirt portion (14) of the front cover (2) and which is provided with one opening (O) for each snapping part, while the snapping part delimitates the opening (O).

3. A flat screen assembly according to claim 1 or 2, **characterized in that** the snapping part, in the assembled position, applies pressure to the snapping means of the front cover (2) in a direction vertical to a screen area.

4. A flat screen assembly according to claim 2 or 3, **characterized in that** the snapping part comprises a snapping bar (8), which delimitates the opening (O) and which, in the assembled position, extends parallel to the screen area.

5. A flat screen assembly according to claim 4, **characterized in that** the snapping bar (8) is provided with ribs (9).

6. A flat screen assembly according to one of the claims 2 to 5, **characterized in that** the snapping means comprises a hook (H) which, in the assembled position, protrudes into the opening (O) of the plate.

7. A flat screen assembly according to one of the claims 1 to 6, **characterized in that** the spacer part is generated as a flexible lug (10), which is arranged in the region of the snapping part.

8. A flat screen assembly according to claim 2 to 5, **characterized in that** the plate comprises the side portion (5) with the spacer part, at which, in the assembled position, the plate is in contact with the flat screen panel (P) and a rear portion (6), which, in the assembled position, extends from the side portion (5) over the rear of the flat screen panel (P) and at which the plate is fixed to the rear cover (1).

9. A flat screen assembly according to one of the claims 2 to 8, **characterized in that** the connection means comprises at least two plates arranged at opposite sides of the flat screen panel (P).

10. A flat screen assembly according to one of the claims 2 to 9, **characterized in that** the plates are generated by a plastic material.
